# EUROPÄISCHE PATENTANMELDUNG

(11) **EP 2 368 793 A2**
(43) Veröffentlichungstag der Anmeldung: **28.09.2011**
(21) Anmeldenummer: 11002233.2
(22) Anmeldetag: 18.03.2011
(51) Int. Cl.: B64C 5/02

(54) **Bemanntes Luftfahrzeug**

(30) Priorität: 23.03.2010 DE 102010012414
(71) Anmelder: Deutsches Zentrum für Luft- und Raumfahrt e. V., 51147 Köln (DE)
(72) Erfinder: Hühne, Christian, 38106 Braunschweig (DE); Bartsch, Ivonne, 38114 Braunschweig (DE); Nickel, Jörg, 38104 Braunschweig (DE); Krajenski, Volker, 38350 Hemlstedt (DE); Ernst, Gerald, 38110 Waggum (DE)
(74) Vertreter: Günther, Constantin

(57) **Zusammenfassung**

Die Erfindung betrifft ein bemanntes Luftfahrzeug (1) mit wenigstens einer Tragfläche (2) zur Auftriebserzeugung und einem in Flugrichtung hinter der Tragfläche angeordneten Höhenleitwerk (3) zur Fluglagestabilisierung und Steuerung des Luftfahrzeuges (1). Das Höhenleitwerk (3) ist bezüglich wenigstens eines der folgenden Parameter des Höhenleitwerks (3) einstellbar:
a) aerodynamisch wirksamer Flächeninhalt (F_{H}),
b) Streckung (Λ_{H}),
c) Pfeilungswinkel (*ϕ_{H}*,*ϕ*₁,*ϕ*₂),
d) Spannweite (b_{H}),
e) die Länge (r_{H}) des Höhenleitwerks-Hebelarms.

## Beschreibung

Die Erfindung betrifft ein bemanntes Luftfahrzeug gemäß dem Oberbegriff des Patentanspruchs 1. Die Erfindung betrifft ferner ein Verfahren zur Einstellung eines oder mehrerer einstellbarer Parameter eines Höhenleitwerks gemäß dem Oberbegriff des Patentanspruchs 11.

Die Erfindung geht aus von bekannten bemannten Luftfahrzeugen, wie zum Beispiel Verkehrsflugzeugen. Für einen effizienten Betrieb werden solche Luftfahrzeuge hinsichtlich ihrer Aerodynamik und ihrer Antriebe fortwährend verbessert, so dass deren Betrieb kraftstoffsparender und umweltschonender erfolgen kann.

Der Erfindung liegt die Aufgabe zugrunde, weitere Verbesserungsmöglichkeiten für solche Luftfahrzeuge aufzuzeigen, mit denen der Betrieb noch effizienter erfolgen kann.

Diese Aufgabe wird durch die in den Ansprüchen 1 und 11 angegebene Erfindung gelöst. Die Unteransprüche geben vorteilhafte Weiterbildungen an.

Gemäß Anspruch 1 wird ein bemanntes Luftfahrzeug mit einer Tragfläche und einem Höhenleitwerk vorgeschlagen. Die Tragfläche dient dabei, neben einer Funktion zur Treibstoffmitnahme und der Anbringung von Steuerorganen und Hochauftriebsmitteln, zur Auftriebserzeugung. Das Höhenleitwerk liefert zwar auch einen Beitrag zum Gesamtauftrieb des Luftfahrzeug, seine hauptsächliche Funktion besteht aber in der Fluglagestabilisierung und Steuerung des Luftfahrzeuges. Weitere Funktionen des Höhenleitwerks sind die Ausführung der Längs- und Nickbewegung. Das Höhenleitwerk ist in Flugrichtung hinter der Tragfläche angeordnet. Gemäß Anspruch 1 wird ein Höhenleitwerk vorgeschlagen, das bezüglich wenigstens eines aerodynamischen Parameters einstellbar ist. Es wurde erkannt, dass abhängig von der Flugphase die Veränderung bestimmter aerodynamischer Parameter sich eine Kraftstoffeinsparung erzielen lässt.

Bisher existieren zum Beispiel in der militärischen Luftfahrt schwenkbare Tragflächen und oder in der zivilen Luftfahrt schwenkbare Canards. Im Bereich der Höhenleitwerke existieren sowohl in der zivilen als auch in der militärischen Luftfahrt bisher ausschließlich starre Konstruktionen. Demgegenüber wird erfindungsgemäß vorgeschlagen, dass das Höhenleitwerk bezüglich wenigstens eines der folgenden Parameter des Höhenleitwerks einstellbar ist:
a) aerodynamisch wirksamer Flächeninhalt (F_{H}),
b) Streckung (Λ_{H}),
c) Pfeilungswinkel (*ϕ_{H},ϕ₁,ϕ₂*),
d) Spannweite (b_{H}),
e) die Länge (r_{H}) des Höhenleitwerks-Hebelarms.

Als Flächeninhalt F_{H} eines Höhenleitwerks ist die geometrische Fläche in Draufsicht bei neutraler Höhenruder-Stellung definiert. Der aerodynamische wirksame Flächeninhalt ist derjenige Anteil des Flächeninhalts, der sich außerhalb des Rumpfs des Luftfahrzeugs befindet.

Die Streckung Λ_{H} eines Höhenleitwerks ist definiert als das Quadrat der Spannweite b_{H} dividiert durch den wirksamen Flächeninhalt F_{H}.

Als Pfeilungswinkel ϕ_{H} ist der Winkel zwischen einer Senkrechten zur Längsachse des Luftfahrzeugs und der Vorderkante des Höhenleitwerks definiert. Ein mit seiner Vorderkante senkrecht zur Längsachse des Luftfahrzeugs stehendes Höhenleitwerk hat somit einen Pfeilungswinkel von 0°.

Als Spannweite b_{H} ist die geometrische Erstreckung des Höhenleitwerks in Richtung einer Senkrechten zur Längsachse des Luftfahrzeuges definiert.

Als Höhenleitwerks-Hebelarm r_{H} ist der Abstand in Längsrichtung des Luftfahrzeuges zwischen den Neutralpunkten der Tragfläche und des Höhenleitwerks.

Durch die Variation der zuvor genannten Einflussgrößen kann der Gesamtwiderstand des Luftfahrzeugs reduziert werden. Durch die Widerstandsreduktion kann eine Erhöhung der Reichweite oder eine Reduzierung des Kraftstoffverbrauchs erzielt werden. Eine Minderung des Kraftstoffverbrauchs verringert beispielsweise den CO₂-Ausstoß.

Die Erfindung erlaubt auch weiterhin eine Trimmung des Höhenleitwerks. Die Funktion des Höhenleitwerks wird daher nicht eingeschränkt.

Jeder der genannten Parameter kann einzeln und für sich genommen einstellbar sein. Vorteilhaft ist auch eine Einstellbarkeit jeweils einer Kombination von Parametern. Gemäß einer vorteilhaften Weiterbildung der Erfindung ist in Kombination der Pfeilungswinkel (ϕ_{H}, der Flächeninhalt F_{H} und die Länge des Höhenleitwerks-Hebelarms r_{H} einstellbar. In einer vorteilhaften Ausgestaltung sind diese Parameter gegenläufig zueinander einstellbar, das heißt der Pfeilungswinkel ist vergrößerbar und zugleich die Länge des Höhenleitwerks-Hebelarms sowie der Flächeninhalt F_{H} verringerbar. Umgekehrt ist bei Verkleinerung des Pfeilungswinkels ϕ_{H} die Länge des Höhenleitwerks-Hebelarms r_{H} und der Flächeninhalt F_{H} vergrößerbar.

Gemäß einer vorteilhaften Weiterbildung der Erfindung ist wenigstens ein einstellbarer Parameter des Höhenleitwerks in Abhängigkeit von wenigstens einer Betriebsgröße des Luftfahrzeugs einstellbar. Vorteilhaft kann die Betriebsgröße die Fluggeschwindigkeit des Luftfahrzeugs sein. Auch andere Betriebsgrößen kommen für eine vorteilhafte Realisierung der Erfindung in Frage, wie zum Beispiel die jeweilige Flugphase, das heißt ob sich das Luftfahrzeug im Reiseflug oder in der Start-/Landephase befindet. Da der Anteil des Reiseflugs am Gesamtflug wesentlich höher ist als der Anteil von Start und Landung, kann durch eine entsprechende Anpassung des Höhenleitwerks eine beträchtliche Einsparung an Kraftstoff erzielt werden.

Gemäß einer vorteilhaften Weiterbildung der Erfindung ist bei einer Erhöhung der Fluggeschwindigkeit des Luftfahrzeugs wenigstens ein einstellbarer Parameter in folgender Weise einstellbar:
a) der aerodynamisch wirksame Flächeninhalt F_{H} wird verringert,
b) die Streckung Λ_{H} wird vergrößert,
c) der Pfeilungswinkel (ϕ_{H},ϕ₁,ϕ₂) wird vergrößert,
d) die Spannweite b_{H} wird verringert,
e) die Länge des Höhenleitwerks-Hebelarms r_{H} wird verringert.

Bei einer Verringerung der Fluggeschwindigkeit erfolgt eine entsprechende umgekehrte Einstellung der genannten Parameter.

Der Gesamtwiderstand W setzt sich aus den verschiedenen Widerstandsanteilen aller widerstandserzeugenden Bauteile (z.B. Tragfläche W_{F} oder Höhenleitwerk W_{H}) zusammen. Die jeweiligen Auftriebe und der Widerstände sind von der jeweiligen Flugphase abhängig. Der Auftrieb A_{H} und der Widerstand W_{H} des Luftfahrzeugs sind abhängig von dem aerodynamisch wirksamen Flächeninhalt des Höhenleitwerks F_{H}. Der Widerstand W_{H} setzt sich aus verschiedenen Widerstandsanteilen zusammen. Ein Anteil ist der induzierte Widerstand. Eine Verringerung der Höhenleitwerksfläche F_{H} reduziert sowohl den Widerstand W_{H} als auch den Auftrieb A_{H} des Höhenleitwerkes. Der erzeugte Auftrieb eines starren Höhenleitwerks wird in erster Linie für die Start- und Landephase benötigt. Starre Höhenleitwerke sind entsprechend auf diese Phase optimiert. Beim Reiseflug kann dagegen die Höhenleitwerksfläche F_{H} verringert werden. Durch eine Vergrößerung der Streckung des Höhenleitwerks Λ_{H} verringert sich der Beiwert des induzierten Widerstands C_{Wi}. Eine Reduzierung des Beiwertes des induzierten Widerstands C_{Wi} hat eine Reduzierung des Widerstandes des Höhenleitwerkes W_{H} und somit auch des Gesamtwiderstands des Luftfahrzeugs W zur Folge. Eine Erhöhung des Pfeilungswinkels des Höhenleitwerks ϕ_{H} verringert gleichzeitig die Spannweite des Höhenleitwerks b_{H}. Zudem wird durch eine Erhöhung des Pfeilungswinkels ϕ_{H} und der Streckung Λ_{H} der Auftriebsanstieg vergrößert. Der Gesamtauftriebsbeiwert kann beim Reiseflug reduziert werden, indem die Fläche F_{H} verringert wird. Durch ein Verschieben des Höhenleitwerks nach vorn, das heißt einer Verringerung der Länge des Höhenleitwerks-Hebelarms r_{H}, kann die Stabilitätsgrenze verringert werden. Durch eine Vergrößerung des Höhenleitwerks-Hebelarms r_{H} kann das entstehende Moment linear vergrößert werden. Der Höhenleitwerks-Hebelarm r_{H} soll beim langsamen Flug maximal sein, da in diesem Zustand das maximale Moment benötigt wird.

Für die Realisierung eines bezüglich eines Parameters einstellbaren Höhenleitwerks kommen verschiedene Ansätze zur Realisierung in Frage. So kann zum Beispiel mittels eines mechatronischen Ansatzes über eine Kinematik der aerodynamisch wirksame Flächeninhalt F_{H}, der Pfeilungswinkel (ϕ_{H},ϕ₁,ϕ₂) und die Länge des Höhenleitwerks-Hebelarms r_{H} einstellbar gestaltet werden und hierdurch auf die jeweilige Flugphase mit den dazugehörigen Betriebsgrößen angepasst werden.

Gemäß einer vorteilhaften Weiterbildung der Erfindung ist wenigstens ein Aktuator, der mit dem einem Höhenleitwerk gekoppelt ist, zur Einstellung wenigstens eines einstellbaren Parameters des Höhenleitwerks auf einen gewünschten Wert vorgesehen. Ferner ist wenigstens eine Steuereinrichtung vorgesehen, die mit dem Aktuator gekoppelt ist. Die Steuereinrichtung ist zur Steuerung des Aktuators in Abhängigkeit von wenigstens einer Betriebsgröße des Luftfahrzeugs, zum Beispiel von der Fluggeschwindigkeit, vorgesehen.

Bezüglich des einstellbaren Höhenleitwerks kann zwischen Konzepten innerhalb und außerhalb des Rumpfs des Luftfahrzeugs unterschieden werden. Konzepte innerhalb des Rumpfs haben den Vorteil, dass die Struktur des Höhenleitwerks erhalten bleibt. Der Teil des Höhenleitwerks bleibt unverändert, der sich außerhalb des Rumpfs befindet und damit auch zum Auftrieb beiträgt. Die Umströmung des Profils des Höhenleitwerks wird damit nicht gestört. Insgesamt bleibt die Struktur des Höhenleitwerks und des dazugehörigen Ruders unverändert.

Konzepte außerhalb des Rumpfs haben den Vorteil, dass der Rumpf und die gesamte innenliegende Struktur insbesondere Mittelkasten und Trimmmechanismus des Höhenleitwerkes unverändert bleiben kann. Die Öffnung im Rumpf zur Aufnahme des Höhenleitwerks muss nicht verändert werden. Insgesamt kann die erforderliche Öffnung kleiner gestaltet werden als bei Konzepten innerhalb des Rumpfs.

Gemäß einer vorteilhaften Weiterbildung der Erfindung ist das wenigstens eine Höhenleitwerk oder ein Abschnitt davon gegenüber dem Rumpf des Luftfahrzeugs um einen Drehpunkt verschwenkbar. Ein solches Verschwenk-Konzept erlaubt eine Veränderung des Pfeilungswinkels (ϕ_{H},ϕ₁,ϕ₂) und der Spannweite b_{H}. Zugleich kann der aerodynamisch wirksame Flächeninhalt F_{H} verändert werden. Das Konzept kann sowohl innerhalb als auch außerhalb des Rumpfs realisiert werden. Entsprechend kann der Drehpunkt innerhalb des Rumpfs oder außerhalb des Rumpfs liegen. In einer vorteilhaften Weiterbildung der Erfindung liegt der Drehpunkt außerhalb des Rumpfs im Bereich des Höhenleitwerks. So kann das Gelenk beispielsweise bei der Hälfte der Längserstreckung einer Höhenleitwerksfläche angeordnet sein. Ein dichter am Rumpf angeordneter Drehpunkt hat den Vorteil, dass die Strömung weniger gestört wird. Allerdings verringert sich hierbei der mögliche Verschwenkwinkel, da der Rumpf eine Begrenzung für den Verschwenkwinkel bildet.

Gemäß einer vorteilhaften Weiterbildung der Erfindung weist das Höhenleitwerk wenigstens einen ein- und ausfahrbaren Abschnitt aus. Vorteilhaft können auch mehrere ein- und ausfahrbare Abschnitte vorgesehen sein, z.B. nach Art einer Teleskopanordnung. Durch dieses Konzept ist der aerodynamisch wirksame Flächeninhalt F_{H}, die Spannweite b_{H} und damit einhergehend die wirksame Streckung Λ_{H} einstellbar.

Gemäß einer vorteilhaften Weiterbildung der Erfindung ist das Höhenleitwerk wenigstens zum Teil in den Rumpf des Luftfahrzeugs ein- und ausfahrbar. Hiermit lässt sich ein Konzept innerhalb des Rumpfs realisieren.

Gemäß einer vorteilhaften Weiterbildung der Erfindung weist das Höhenleitwerk wenigstens einen ersten Abschnitt auf, der gegenüber einem zweiten Abschnitt des Höhenleitwerks ein- und ausfahrbar ist. Hierdurch lässt sich ein weiteres Konzept außerhalb des Rumpfs realisieren.

Die genannten Konzepte außerhalb und innerhalb des Rumpfs sind auch vorteilhaft miteinander kombinierbar.

Die Erfindung betrifft außerdem ein vorteilhaftes Verfahren zur Einstellung eines einstellbaren Parameters eines Höhenleitwerks der zuvor beschriebenen Art. Hierbei wird wenigstens eine Betriebsgröße des Luftfahrzeugs, insbesondere die Fluggeschwindigkeit, erfasst. Der einstellbare Parameter wird in Abhängigkeit von der erfassten Betriebsgröße eingestellt. In einer vorteilhaften Ausgestaltung der Erfindung ist vorgesehen, dass bei einer Erhöhung der Fluggeschwindigkeit des Luftfahrzeugs wenigstens ein einstellbarer Parameter in folgender Weise verändert wird:
a) der aerodynamisch wirksame Flächeninhalt F_{H} wird verringert,
b) die Streckung Λ_{H} wird vergrößert,
c) der Pfeilungswinkel (ϕ_{H},ϕ₁,ϕ₂) wird vergrößert,
d) die Spannweite b_{H} wird verringert,
e) die Länge des Höhenleitwerks-Hebelarms r_{H} wird verringert.

Bei einer Verringerung der Fluggeschwindigkeit werden die Parameter entsprechend in umgekehrter Richtung verändert.

Die Erfindung wird nachfolgend anhand von Ausführungsbeispielen unter Verwendung von Zeichnungen näher erläutert.

Es zeigen:
- Figur 1: - ein Luftfahrzeug in Seitenansicht und
- Figur 2: - ein Luftfahrzeug in Draufsicht und
- Figur 3 und 4: - eine erste Ausführungsform eines Höhenleitwerks und
- Figur 5 und 6: - eine zweite Ausführungsform eines Höhenleitwerks und
- Figur 7 und 8: - eine dritte Ausführungsform eines Höhenleitwerks und
- Figur 9 und 10: - eine vierte Ausführungsform eines Höhenleitwerks und
- Figur 11: - eine fünfte Ausführungsform eines Höhenleitwerks und
- Figur 12 und 13 -: ein Luftfahrzeug in Seitenansicht mit einer sechsten Ausführungsform eines Höhenleitwerks.

In den Figuren werden gleiche Bezugszeichen für einander entsprechende Elemente verwendet.

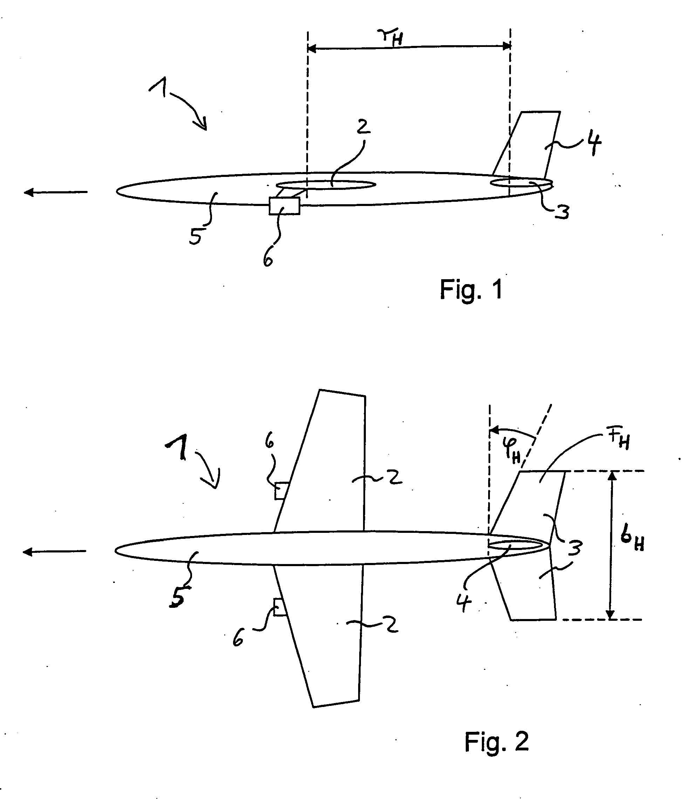

Die Figur 1 zeigt ein bemanntes Luftfahrzeug 1 in Seitenansicht. Das Luftfahrzeug 1 bewegt sich in einer Flugrichtung, die durch den Pfeil vor dem Luftfahrzeug 1 dargestellt ist. Das Luftfahrzeug 1 weist eine Tragfläche 2 sowie ein in Flugrichtung hinter der Tragfläche 2 angeordnetes Höhenleitwerk 3 und ein Seitenleitwerk 4 auf. Die Tragfläche 2, das Höhenleitwerk 3 und das Seitenleitwerk 4 sind an einen Rumpf 5 des Luftfahrzeugs befestigt. An der Tragfläche 2 ist außerdem ein Triebwerk 6 angebracht. Zwischen dem Neutralpunkt der Tragfläche 2 und dem Neutralpunkt des Höhenleitwerks 3 wird ein Höhenleitwerks-Hebelarm der Länge r_{H} gebildet.

Die Figur 2 zeigt das Luftfahrzeug gemäß Figur 1 in einer Draufsicht. Erkennbar sind hier die linke und die rechte Tragfläche 2, die jeweils mit einem Triebwerk 6 versehen sind. Erkennbar ist ferner ein Pfeilungswinkel *ϕ*_{H}, der gegenüber einer Senkrechten zur in Flugrichtung verlaufenden Längsachse des Luftfahrzeugs 1 und der Vorderkante des Höhenleitwerks 3 gebildet ist. Erkennbar ist ferner die Spannweite b_{H} des Höhenleitwerks 3. Außerdem ist die linke und rechte Seite des Höhenleitwerks 3 und das Seitenleitwerk 4 zu erkennen.

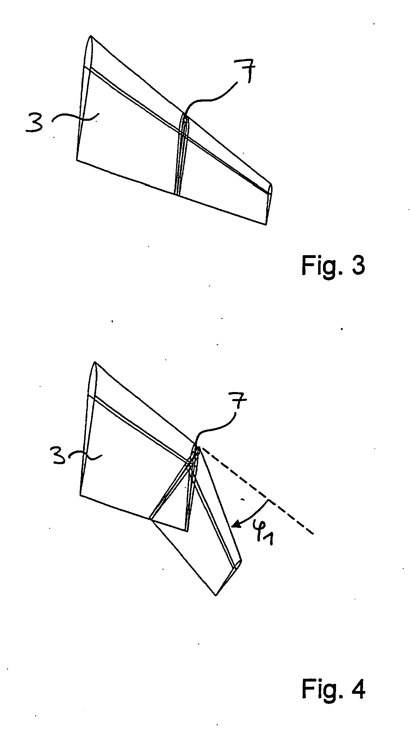

Die Figur 3 zeigt eine Hälfte eines Höhenleitwerks 3 mit einem Gelenk an einem Drehpunkt 7. Der Drehpunkt 7 ist etwa auf der halben Halbspannweite des Höhenleitwerks 3 angeordnet. Um den Drehpunkt 7 ist der außen liegende Teil des Höhenleitwerks 3 gegenüber dem innen liegenden Teil verschwenkbar, wie anhand der Figur 4 dargestellt. Die Figur 4 zeigt hierbei eine Verschwenkung um einen Winkel *ϕ*₁. Durch die Verschwenkung des äußeren Teils des Höhenleitwerks 3 um den Winkel *ϕ*₁ wird auch ein veränderter, hieraus resultierender Pfeilungswinkel des Höhenleitwerks gebildet. Die Figuren 3 und 4 zeigen damit ein Konzept eines verschwenkbaren Höhenleitwerksabschnitts außerhalb des Rumpfs 1.

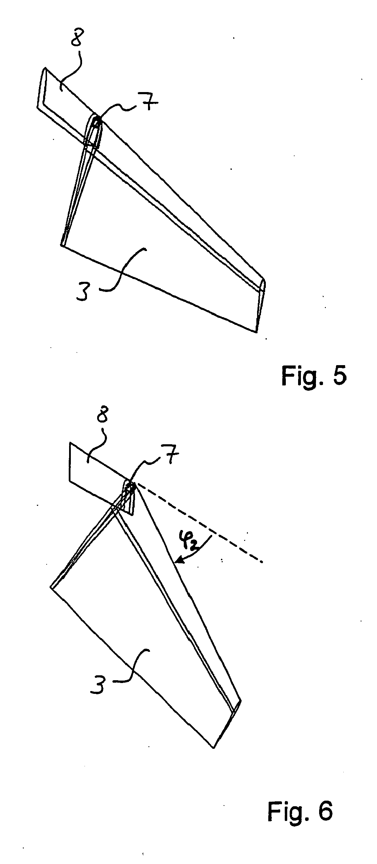

Die Figuren 5 und 6 zeigen ein Konzept eines verschwenkbaren Höhenleitwerks 3 innerhalb des Rumpfs 1. Dargestellt ist wiederum eine Hälfte eines Höhenleitwerks 3. Das Höhenleitwerk 3 ist im Rumpf an einer Höhenleitwerkshalterung 8 befestigt. Das Höhenleitwerk 3 ist mittels eines Gelenks um einen Drehpunkt 7, der innerhalb des Rumpfs oder am Übergang des Rumpfs zur Umgebung liegt, schwenkbar gelagert. Die Figur 6 zeigt ein Verschwenken des Höhenleitwerks 3 um einen Winkel *ϕ*2. Hierdurch wird der Pfeilungswinkel des Höhenleitwerks verändert.

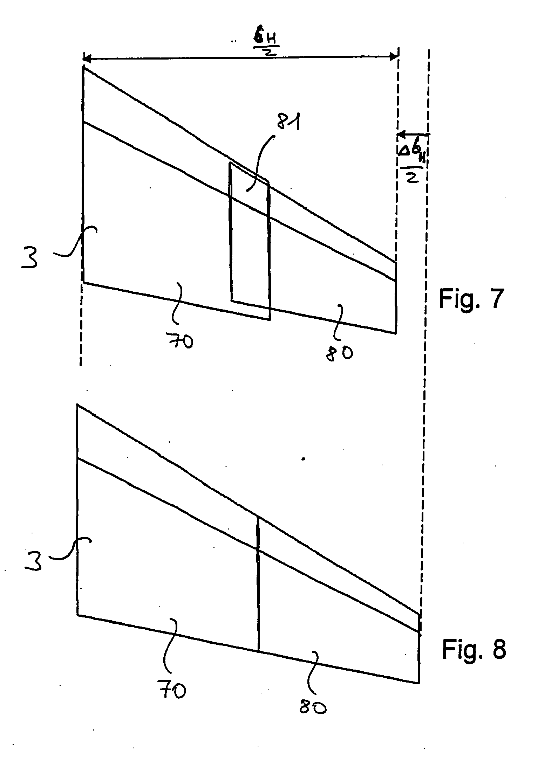

Die Figuren 7 und 8 zeigen, wiederum anhand einer Hälfte eines Höhenleitwerks, ein Höhenleitwerk 3, das hinsichtlich seiner Spannweite b_{H} längenveränderbar ist. Hierbei ist ein erster Teil 70 des Höhenleitwerks 3 fest mit dem Rumpf 1 verbunden. Ein zweiter Teil 80 des Höhenleitwerks 3 ist verschiebbar mit dem ersten Teil 70 verbunden. Das zweite Teil 80 ist gegenüber dem ersten Teil 70 teleskopartig einfahrbar und ausfahrbar. Die Figur 8 zeigt das Höhenleitwerk 3 bei vollständig ausgefahrenem zweiten Teil 80. Die Figur 7 zeigt das Höhenleitwerk 3 bei um einen Wert Δb_{H}/2 in den ersten Teil 70 eingefahrenen zweiten Teil 80 des Höhenleitwerks 3. Der zweite Teil 80 ist dabei mit einem Abschnitt 81 innerhalb des ersten Teils 70 des Höhenleitwerks 3 angeordnet. Die Figuren 7 und 8 zeigen damit ein Konzept außerhalb des Rumpfs 1.

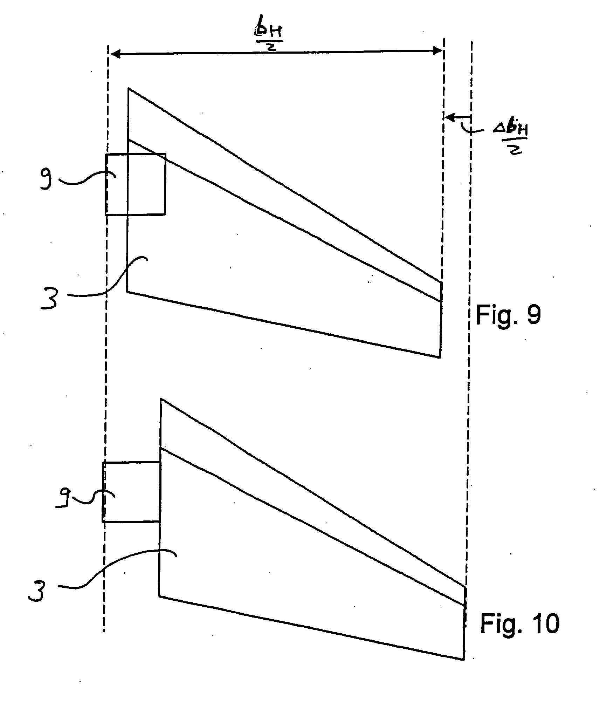

Die Figuren 9 und 10 zeigen ein Konzept eines ein- und ausfahrbaren Höhenleitwerks innerhalb des Rumpfs 1. Das ebenfalls nur bezüglich einer Hälfte dargestellte Höhenleitwerk 3 wird über eine im Rumpf befestigte Halterungseinrichtung 9 gehalten. Das Höhenleitwerk 3 ist gegenüber der Halterungseinrichtung 9 in einer Richtung ungefähr senkrecht zur Längsachse des Luftfahrzeugs 1 verschiebbar. Die Figur 10 zeigt das Höhenleitwerk 3 in vollständig ausgefahrenem Zustand. Die Figur 9 zeigt das Höhenleitwerk 3 in einem um den Wert Δb_{H}/2 eingefahrenen Zustand.

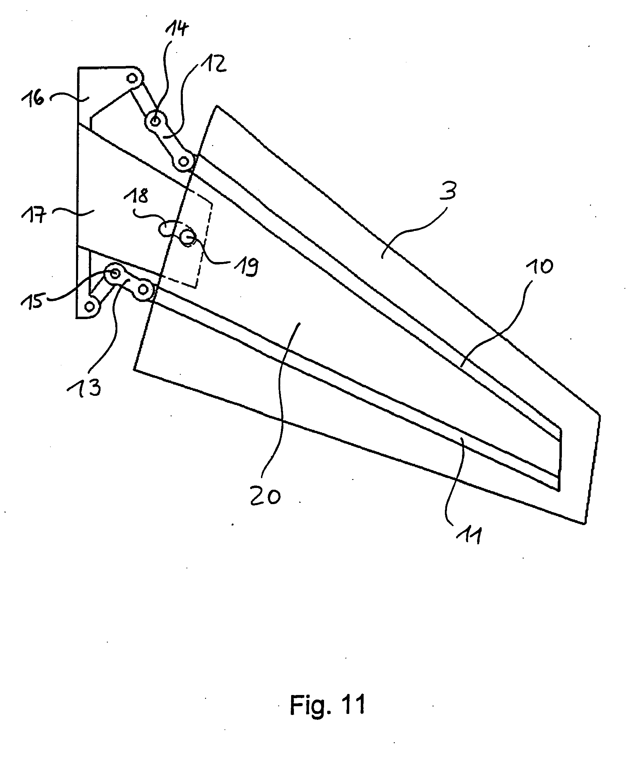

Die Figur 11 zeigt eine Ausführungsform eines Höhenleitwerks 3, wiederum anhand einer Höhenleitwerkshälfte, bei der eine Verschwenkbarkeit des Höhenleitwerks und eine Verschiebbarkeit, das heißt ein Ein- und Ausfahren in den Rumpf, miteinander kombiniert sind. Das Höhenleitwerk 3 weist dabei zwei Verstärkungen 10, 11 auf. Die Verstärkung 10 ist mit der Gelenkanordnung 12 verbunden. Die Verstärkung 11 ist mit einer Gelenkanordnung 13 verbunden. Die Gelenkanordnungen 12, 13 weisen jeweils drei Drehgelenke auf, das heißt es sind drei Drehpunkte bei jeder Gelenkanordnung vorgesehen. Die Gelenkanordnungen 12, 13 sind an einem Träger 16 befestigt, der innerhalb des Rumpfs über den Trimmmechanismus fest mit dem Luftfahrzeug 1 verbunden ist. An dem Träger 16 ist zudem ein zungenartiges Stützelement 17 vorgesehen, das in einen zwischen den Verstärkungen 10, 11 gebildeten Hohlraum 20 des Höhenleitwerks 3 hineinragt. Mit dieser Konstruktion lassen sich die Parameter Fläche des Höhenleitwerkes F_{H}, Höhenleitwerks-Hebelarm r_{H}, Pfeilungswinkel *ϕ_{H}* und Spannweite des Höhenleitwerkes b_{H} beeinflussen.

Die Gelenkanordnung 12 weist einen Aktuator 14, zum Beispiel einen Elektromotor, auf, der an dem mittleren der drei Gelenke angeordnet ist. Über den Aktuator 14 kann die Gelenkanordnung 12 betätigt und damit bewegt werden. Analog dazu ist in der Gelenkanordnung 13 an dem mittleren Gelenk-Drehpunkt ein weiterer Aktuator 15 vorgesehen, der vergleichbar wie der Aktuator 14 ausgebildet sein kann. Über den Aktuator 15 ist die Gelenkanordnung 13 beweglich betätigbar. Durch entsprechende Betätigung der Aktuatoren 14, 15 kann das Höhenleitwerk 3 auf dem Stützelement 17 in verschiedene Richtungen bewegt werden. Insbesondere kann eine Verschwenkbewegung um einen virtuellen, innerhalb oder außerhalb des Rumpfs gelegenen Drehpunkt sowie eine Translationsbewegung zum Einfahren und Ausfahren des Höhenleitwerks 3 realisiert werden. Hierdurch kann der Pfeilungswinkel ϕ_{H} und die Spannweite des Höhenleitwerks b_{H} verändert werden.

Das Stützelement 17 weist zusätzlich eine einen vorbestimmten Profilverlauf aufweisende Nut oder Vertiefung 18 auf. An dem Höhenleitwerk 3 ist ein Zapfen 19 vorgesehen, der in die Nut oder Vertiefung 18 eingreift. Bei einem Bewegen des Höhenleitwerks 3 durch die Aktuatoren 14, 15 bewirkt die das bestimmte Profil aufweisende Nut oder Vertiefung 18 in Verbindung mit dem Zapfen 19 eine vorgegebene kombinierte Verschwenk- und Translationsbewegung des Höhenleitwerks 3. Über die Profilgebung der Nut oder Vertiefung 18 können jeweilige, gewünschte Bewegungsverläufe des Höhenleitwerks 3 realisiert werden.

Wie erkennbar ist, können mit Hilfe der Gelenke und der Aktuatoren der Pfeilungswinkel *ϕ*_{H}, der aerodynamisch wirksame Flächeninhalt F_{H} und der Höhenleitwerks-Hebelarm r_{H} hinsichtlich seiner Länge verändert werden. Die dargestellte Kinematik kann somit eine Bewegung ausführen, mit der sinnvoll zum Beispiel beim Übergang vom Langsam- zum Reiseflug der Pfeilungswinkel *ϕ*_{H} erhöht werden kann, der aerodynamisch wirksame Flächeninhalt F_{H} und die Länge des Hebelarms r_{H} verkleinert werden können. Zudem kann bei dem Übergang eine Bewegung realisiert werden, die eine verhältnismäßig geringe Öffnung im Rumpf erfordert. Das Höhenleitwerk 3 ist in der Langsamflug-Konfiguration voll ausgefahren und hat dann einen geringen Pfeilungswinkel *ϕ*_{H}. Beim Übergang zur Reiseflugkonfiguration wird das Höhenleitwerk erst entlang des Rumpfs nach vorne geschoben. Hierdurch verringert sich die Länge des Höhenleitwerk-Hebelarms r_{H}. Anschließend wird das Höhenleitwerk nach hinten verschwenkt und damit der Pfeilungswinkel *ϕ*_{H} erhöht. Schließlich wird das Höhenleitwerk 3 in den Rumpf eingefahren, so dass der aerodynamisch wirksame Flächeninhalt F_{H} reduziert wird. Durch einen solchen Bewegungsablauf kann die erforderliche Öffnung im Rumpf verhältnismäßig gering gehalten werden. Der beschriebene Bewegungsablauf kann durch geeignete Steuerung der Aktuatoren 14, 15, zum Beispiel durch entsprechende Programmierung eines Steuergerätes, realisiert werden. Der Bewegungsablauf kann auch durch die entsprechende Profilgebung der Nut oder Vertiefung 18 realisiert bzw. unterstützt werden.

Die Konstruktion gemäß Fig. 11 weist 6 Drehpunkte auf, mit denen sich die Parameter beliebig einstellen lassen. Die Konstruktionen gemäß den Figuren 3 bis 10 weisen jeweils nur einen Drehpunkt auf.

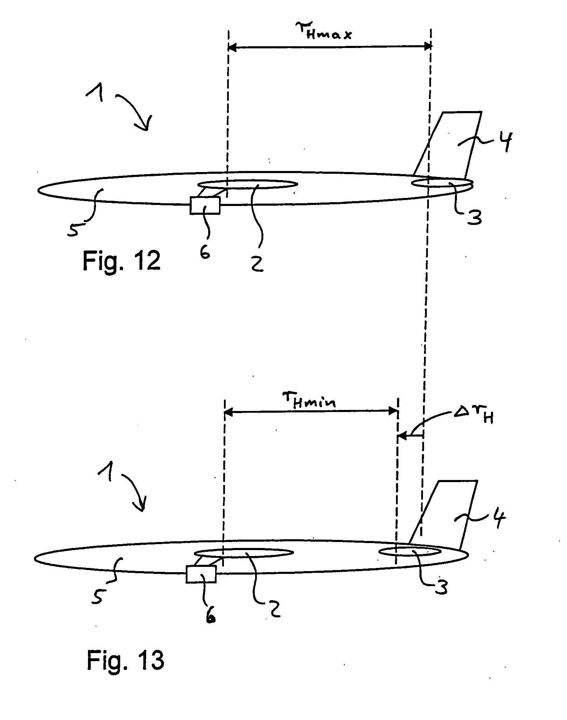

Die Figuren 12 und 13 zeigen das Luftfahrzeug 1 in Seitenansicht. Hierbei ist eine weitere Ausführungsform eines Höhenleitwerks 3 vorgesehen, das in Längsrichtung des Luftfahrzeugs, das heißt in Flugrichtung, verschiebbar ist. Hierdurch kann die Länge des Höhenleitwerk-Hebelarms r_{H} verändert werden. Die Figur 12 zeigt die Start- und Landekonfiguration, bei der der maximal einstellbare Höhenleitwerks-Hebelarm r_{Hmax} eingestellt ist. Die Figur 13 zeigt die Reiseflugkonfiguration. Hierbei ist das Höhenleitwerk 3 um den Wert Δr_{H} nach vorne verschoben, so dass ein hinsichtlich seiner Länge verkürzter Höhenleitwerk-Hebelarm r_{Hmin} entsteht.

## Patentansprüche

1. Bemanntes Luftfahrzeug (1) mit wenigstens einer Tragfläche (2) zur Auftriebserzeugung und einem in Flugrichtung hinter der Tragfläche angeordneten Höhenleitwerk (3) zur Fluglagestabilisierung und Steuerung des Luftfahrzeuges (1), **dadurch gekennzeichnet, dass** das Höhenleitwerk (3) bezüglich wenigstens einem der folgenden Parameter des Höhenleitwerks (3) einstellbar ist:
a) aerodynamisch wirksamer Flächeninhalt (F_{H}),
b) Streckung (Λ_{H}),
c) Pfeilungswinkel (*ϕ_{H}*,*ϕ*₁,*ϕ*₂),
d) Spannweite (b_{H}),
e) die Länge (r_{H}) des Höhenleitwerks-Hebelarms.

2. Luftfahrzeug nach Anspruch 1, **dadurch gekennzeichnet, dass** wenigstens ein einstellbarer Parameter (F_{H}, Λ_{H}, *ϕ_{H}*,*ϕ*₁,*ϕ*_{2,} b_{H}, r_{H}) des Höhenleitwerks (3) in Abhängigkeit von wenigstens einer Betriebsgröße des Luftfahrzeugs (1) einstellbar ist.

3. Luftfahrzeug nach Anspruch 2, **dadurch gekennzeichnet, dass** eine Betriebsgröße die Fluggeschwindigkeit des Luftfahrzeugs (1) ist.

4. Luftfahrzeug nach Anspruch 3, **dadurch gekennzeichnet, dass** bei einer Erhöhung der Fluggeschwindigkeit des Luftfahrzeugs (1) wenigstens ein einstellbarer Parameter in folgender Weise einstellbar ist:
a) der aerodynamisch wirksame Flächeninhalt (F_{H}) wird verringert,
b) die Streckung (ΛH) wird vergrößert,
c) der Pfeilungswinkel (*ϕ_{H}*,*ϕ*₁,*ϕ*₂) wird vergrößert,
d) die Spannweite (b_{H}) wird verringert,
e) die Länge (r_{H}) des Höhenleitwerks-Hebelarms wird verringert.

5. Luftfahrzeug nach einem der Ansprüche 2 bis 4, **dadurch gekennzeichnet, dass** wenigstens ein Aktuator (14, 15), der mit dem Höhenleitwerk (3) gekoppelt ist, zur Einstellung wenigstens eines einstellbaren Parameters (F_{H}, Λ_{H}, *ϕ_{H}*,*ϕ*₁,*ϕ*₂, b_{H}, r_{H}) des Höhenleitwerks (3) auf einen gewünschten Wert vorgesehen ist, und wenigstens eine Steuereinrichtung, die mit dem Aktuator (14, 15) gekoppelt ist, zur Steuerung des Aktuators (14, 15) in Abhängigkeit von wenigstens einer Betriebsgröße des Luftfahrzeugs (1) vorgesehen ist.

6. Luftfahrzeug nach einem der vorhergehenden Ansprüche, **dadurch gekennzeichnet, dass** das Höhenleitwerk (3) oder ein Abschnitt davon gegenüber dem Rumpf (5) des Luftfahrzeuges (1) um einen Drehpunkt (7) verschwenkbar ist.

7. Luftfahrzeug nach Anspruch 6, **dadurch gekennzeichnet, dass** der Drehpunkt (7) außerhalb des Rumpfs (5) im Bereich des Höhenleitwerks (3) liegt.

8. Luftfahrzeug nach einem der vorhergehenden Ansprüche, **dadurch gekennzeichnet, dass** das Höhenleitwerk (3) wenigstens einen ein- und ausfahrbaren Abschnitt (70, 80) aufweist.

9. Luftfahrzeug nach Anspruch 8, **dadurch gekennzeichnet, dass** das Höhenleitwerk (3) wenigstens zum Teil in den Rumpf (5) des Luftfahrzeugs (1) ein- und ausfahrbar ist.

10. Luftfahrzeug nach Anspruch 8 oder 9, **dadurch gekennzeichnet, dass** das Höhenleitwerk (3) wenigstens einen ersten Abschnitt (80) aufweist, der gegenüber einem zweiten Abschnitt (70) des Höhenleitwerks (3) ein- und ausfahrbar ist.

11. Verfahren zur Einstellung eines oder mehrerer Parameter (F_{H}, Λ_{H}, *ϕ_{H}*,*ϕ*₁,*ϕ*₂*,* b_{H}, r_{H}) eines Höhenleitwerks (3) nach einem der vorhergehenden Ansprüche, **dadurch gekennzeichnet, dass** wenigstens eine Betriebsgröße des Luftfahrzeugs (1), insbesondere die Fluggeschwindigkeit, erfasst wird und der einstellbare Parameter (F_{H}, Λ_{H}, *ϕ_{H}*,*ϕ*₁,*ϕ*₂, b_{H}, r_{H}) in Abhängigkeit von der erfassten Betriebsgröße eingestellt wird.

12. Verfahren nach Anspruch 11, **dadurch gekennzeichnet, dass** als Betriebsgröße die Fluggeschwindigkeit des Luftfahrzeugs (1) erfasst wird und bei einer Erhöhung der Fluggeschwindigkeit des Luftfahrzeugs (1) wenigstens ein einstellbarer Parameter in folgender Weise verändert wird:
a) der aerodynamisch wirksame Flächeninhalt (F_{H}) wird verringert,
b) die Streckung (Λ_{H}) wird vergrößert,
c) der Pfeilungswinkel (*ϕ_{H}*,*ϕ*₁,*ϕ*₂) wird vergrößert,
d) die Spannweite (b_{H}) wird verringert,
e) die Länge (r_{H}) des Höhenleitwerks-Hebelarms wird verringert.
